# EUROPEAN PATENT APPLICATION

(11) **EP 1 600 466 A1**
(43) Date of publication of application: **30.11.2005**
(21) Application number: 05010221.9
(22) Date of filing: 11.05.2005
(51) Int. Cl.: C08G 18/48, C08G 18/08, B29C 41/00, B32B 27/20, B32B 27/40, C08J 5/10, C08G 18/12

(54) **Sprayable elastomer composition**

(30) Priority: 26.05.2004 US 853815
(71) Applicant: BASF CORPORATION, Florham Park, NJ 07932 (US)
(72) Inventor: Pavlinac, Jon, South Lyon MI 48178 (US)
(74) Representative: Karg, Jochen

(57) **Abstract**

The subject invention provides a resin component, a sprayable elastomer composition that includes an isocyanate component and the resin component, and a method of making a composite structure. The resin component is reactive with the isocyanate component and includes a first polyol and a second polyol that is different from the first polyol. The resin component further includes a moisture scavenger and an anti-settling agent to prevent the moisture scavenger from settling out of the resin component. For the method, a first layer is applied to a mold cavity. The first layer is a show surface of the composite structure. The sprayable elastomer composition is sprayed on the first layer to form a support layer. The composite structure is then cured in the mold cavity. After curing, the composite structure is demolded from the mold cavity.

## Description

### FIELD OF THE INVENTION

The present invention generally relates to a sprayable elastomer composition, a resin component for use in the sprayable elastomer composition, and a method of making a composite structure using the sprayable elastomer composition. More specifically, the sprayable elastomer composition and the resin component include a moisture scavenger and an anti-settling agent.

### BACKGROUND OF THE INVENTION

A recent trend in the automobile industry has been the use of composite structures for automotive trim components. Many of these composite structures are polyurethane composite structures that include a show surface and a support layer. The support layer is typically formed from a sprayable elastomer composition. The sprayable elastomer composition includes a resin component and an isocyanate component. The resin component and the isocyanate component react to form the support layer. More specifically, the sprayable elastomer compositions are based on precise mixtures of polyols and additives for striking a balance between viscosity sufficient to enable spraying and concentration of the polyols and additives to maintain reaction rates. Conventional sprayable elastomer compositions are commercially available under the tradename Elastoskin® from BASF Corporation of Mount Olive, NJ.

Support layers formed from the sprayable elastomer composition offer cost savings over other compositions used to form the support layer, such as polyvinyl chloride. Support layers formed from the sprayable elastomer composition also exhibit excellent green strength for resisting runs and sagging and for facilitating rapid demolding after spraying. These properties make the support layer formed from the sprayable elastomer composition ideal for inclusion in the composite structures.

However, one of the problems encountered with sprayable elastomer compositions of the prior art is that the isocyanate component is reactive with moisture, which affects the reaction between the isocyanate component and the resin component, formation of the support layer formed from the sprayable elastomer composition, and adhesion of the support layer to the show surface. To counteract this problem, moisture scavengers have been included in the resin component to prevent moisture from reacting with the isocyanate component. However, the moisture scavengers settle out of the resin component over time and are difficult to remix into the resin component. As a result, the support layers formed from the sprayable elastomer composition may exhibit inconsistent quality and lack of adhesion to the show surface and are still susceptible to reaction between moisture and the isocyanate component.

It is known in the art to include anti-settling agents in a polyurethane or polyamine resin component for preventing the moisture scavenger from settling out of the resin component. For example, U.S. Patent No. 6,617,032 discloses a polyamine resin component including a fumed silica in an amount of 0.5 parts by weight and moisture scavenger in an amount of 2 parts by weight, both based on the total weight of the resin component. However, the resin components of the '032 patent do not include a sufficient amount of the anti-settling agent to prevent the moisture from affecting the reaction of the subject invention. More specifically, a ratio between the amount of fumed silica and moisture scavenger is not sufficient to prevent the moisture scavenger from settling out of the resin component of the subject invention. U.S. Pub. No. 2003/0191235 discloses a resin component including polyols and fumed silica in an amount of 0.375 parts by weight based on the total weight of the resin component, which does not sufficiently prevent the moisture scavenger from settling out of the resin component of the subject invention. As a result, the support layer formed from the resin component exhibits inconsistent quality and insufficient adhesion to the show surface.

The resin component used in the sprayable elastomer composition is sensitive to the addition of additives and is formulated to ensure that the additives do not change the properties of the sprayable elastomer composition. For example, even with additives, the resin component must remain sufficiently viscous to enable spraying and must retain a sufficient concentration of the polyols to effectively react with the isocyanate component.

Due to the deficiencies of the prior art, including those described above, it is desirable to provide a novel sprayable elastomer composition and a resin component for use in the sprayable elastomer composition that are minimally affected by the presence of moisture during reaction such that the support layer formed from the sprayable elastomer composition and the resin component exhibits consistent quality and sufficient adhesion to the show surface. It is also desirable to provide a novel method of making a composite structure using the sprayable elastomer composition including the resin component.

### SUMMARY OF THE INVENTION AND ADVANTAGES

The subject invention provides a sprayable elastomer composition that includes a resin component and an isocyanate component. The resin component is reactive with the isocyanate component and includes a first polyol and a second polyol that is different from the first polyol. The composition further includes a moisture scavenger and an anti-settling agent.

The subject invention further provides a method of making a composite structure in a mold having a mold cavity. For the method, a first layer that is a show surface of the composite structure is applied to the mold cavity. The sprayable elastomer composition is applied on the first layer to form a support layer. The composite structure is then cured in the mold cavity. After curing, the composite structure is demolded from the mold cavity.

Due to the presence of the moisture scavenger and the anti-settling agent, the sprayable elastomer composition and the resin component are minimally affected by the presence of moisture during reaction. The anti-settling agent prevents the moisture scavenger from settling out of the resin component thereby maximizing the effectiveness of the moisture scavenger. As a result, support layers formed from the sprayable elastomer composition and the resin component exhibit consistent quality and sufficient adhesion to the show surface.

### DETAILED DESCRIPTION OF A PREFERRED EMBODIMENT

The subject invention provides a sprayable elastomer composition, a resin component for inclusion in the sprayable elastomer composition, and a method for producing a composite structure. The composite structure has a first layer and a support layer formed from the sprayable elastomer composition. The sprayable elastomer composition includes an isocyanate component and the resin component. The resin component according to the present invention includes a first polyol and a second polyol that is different from the first polyol.

The sprayable elastomer composition also includes a moisture scavenger and an anti-settling agent. Preferably, the moisture scavenger and the anti-settling agent are included in the resin component of the sprayable elastomer composition. However, it is to be appreciated that the moisture scavenger and the anti-settling agent may be included in the sprayable elastomer composition separate from the resin component. The moisture scavenger is present to prevent moisture from reacting with the isocyanate component, and the anti-settling agent is present to prevent the moisture scavenger from settling out of the sprayable elastomer composition or resin component, thereby maximizing the effectiveness of the moisture scavenger.

Preferably, the moisture scavenger is selected from the group of sodium aluminasilicates, potassium aluminasilicates, calcium aluminasilicates, and combinations thereof. More preferably, the moisture scavenger is a combination of sodium aluminasilicate and potassium aluminasilicate commercially available as Molecular Sieve 3A from UOP LLC. Other suitable moisture scavengers include cesium aluminasilicates, barium aluminasilicates, magnesium aluminasilicates, strontium aluminasilicates, sodium aluminophosphates, potassium aluminophosphates, calcium aluminophosphates, and combinations thereof. Moisture scavengers commercially available under the tradename Baylith® from Bayer Inc. are also suitable. Preferably, the moisture scavenger is present in an amount of at least 1 parts by weight, more preferably from 1.2 to 2 parts by weight, based on the total weight of the resin component.

The anti-settling agent is preferably a hydrophobic fumed silica, examples of which include those commercially available from Degussa under the trade name Aerosil® R972, R974, R812, R202, R204, R805, R104, R106, R816, R816, R504, R711, R8200, or RX50. Most preferably, the anti-settling agent is Aerosil® 972. Other anti-settling agents are also suitable for the subject invention, including but not limited to, hydrophilic fumed silica, montmorillonites, and combinations thereof. Preferably, the anti-settling agent is present in an amount greater than 0.5 parts by weight, more preferably from 0.6 to 2.5 parts by weight, based on the total weight of the resin component.

Preferably, the moisture scavenger and the molecular sieve are present in a weight ratio of from 1:1 to 9:1, more preferably from 1.6:1 to 5:1, for preventing the moisture scavenger from settling out of the resin component and the sprayable elastomer composition, thereby maximizing the effectiveness of the moisture scavenger.

The first and second polyols generally include one or more polyols which are prepared by the catalytic condensation of an alkylene oxide or mixture of alkylene oxides either simultaneously or sequentially with an organic compound. The first polyol has a nominal functionality of at least two, preferably from two to three. The second polyol has a nominal functionality of at least three, preferably from three to five. Preferably, the first and second polyols each have a hydroxyl number of from 20 to 55 mg KOH/g, more preferably from 24 to 35 mg KOH/g.

Representative first and second polyols include, but are not limited to, polyhydroxyl-containing polyesters and polycarbonates, polyoxyalkylene polyether polyols such as polyhydroxy-terminated polyurethane polymers, polyhydroxyl-containing phosphorous compounds, and alkylene oxide adducts of polyhydric polythioesters, polyacetals, aliphatic polyols and thiols, ammonia and amines including aromatic, aliphatic and heterocyclic amines, as well as mixtures thereof. Alkylene oxide adducts of compounds which contain two or more different groups within the above-defined classes may also be used, for example, amino alcohols which contain an amino group and a hydroxyl group. Also, alkylene oxide adducts of compounds which contain one SH group and one OH group as well as those which contain an amino group and an SH group may be used.

Suitable hydroxy-terminated polyesters may be used such as those prepared, for example, from polycarboxylic acids and polyhydric alcohols. Any suitable polycarboxylic acid may be used such as oxalic acid, malonic acid, succinic acid, glutaric acid, adipic acid, pimelic acid, suberic acid, azelaic acid, sebacic acid, brassylic acid, thapsic acid, maleic acid, fumaric acid, glutaconic acid, α-hydromuconic acid, β-hydromuconic acid, α-butyl-α-ethyl-glutaric acid, α, β-diethylsuccinic acid, isophthalic acid, terephthalic acid, hemimellitic acid and 1,4-cyclohexanedicarboxylic acid. Any suitable polyhydric alcohol, including both aliphatic and aromatic, may be used such as, for the first polyol, ethylene glycol, diethylene glycol, propylene glycol, dipropylene glycol, trimethylene glycol, 1,2-butanediol, 1,3-butanediol, 1,4-butanediol, 1,2-pentanediol, 1,4-pentanediol, 1,5-pentanediol, 1,6-hexanediol, 1,7-heptanediol, and, for the second polyol, glycerol, 1,1,1-trimethylolpropane, 1,1,-trimethylolethane, 1,2,6-hexanetriol, α-methyl glucoside, pentaerythritol, and sorbitol. Also included within the term "polyhydric alcohols" are compounds derived from phenol such as 2,2-bis(4-hydroxylphenyl)propane, commonly known as Bisphenol A.

The hydroxyl-containing polyester may also be a polyester amide such as is obtained by including some amine or amino alcohol in the reactants for the preparation of the polyesters. Thus, polyester amides may be obtained by condensing an amino alcohol such as ethanolamine with the polycarboxylic acids set forth above or they may be made using the same components that make up the hydroxyl-containing polyester with only a portion of the components being a diamine such as ethylene diamine.

Any suitable polyoxyalkylene polyether polyol may be used such as the polymerization product of an alkylene oxide or a mixture of alkylene oxides with a polyhydric alcohol. Any suitable polyhydric alcohol may be used such as those disclosed above for use in the preparation of the hydroxy-terminated polyesters.

Suitable initiators for both the first and second polyols include both aliphatic and aromatic compounds. More specifically, for the first polyol, suitable initiators include ethylene glycol, propylene glycol, dipropylene glycol, trimethylene glycol, 1,2-butanediol, 1,3-butanediol, 1,4-butanediol, 1,2-pentanediol, 1,4-pentanediol, 1,5-pentanediol, 1,6-hexanediol, and 1,7-heptanediol. For the second polyol, suitable initiators include glycerol, 1,1,1-trimethylolpropane, 1,1,1-trimethylolethane, 1,2,6-hexanetriol, α-methyl glucoside, pentaerythritol, and sorbitol. Polyethers which are particularly suitable initiators for the first polyol include propylene glycol, dipropylene glycol, and mixtures thereof. Polyethers which are particularly suitable initiators for the second polyol include the alkylene oxide addition products of trimethylolpropane, glycerine, sucrose and mixtures thereof.

Any suitable alkylene oxide may be used including ethylene oxide, propylene oxide, butylene oxide, amylene oxide, mixtures thereof. Additional alkylene oxides that are also suitable include tetrahydrofuran, alkylene oxide-tetrahydrofuran mixtures, epihalohydrins, and aralkylene oxides such as styrene oxide.

Preferably, the first and second polyols are present in the resin component in an amount of at least 50 parts by weight based on the total weight of the resin component. More preferably, the first and second polyols are present in an amount of from 54 to 85 parts by weight, most preferably from 75 to 85 parts by weight based on the total weight of the resin component.

On an individual basis, the first polyol is preferably present in the resin component in an amount of at least 10 parts by weight, more preferably from 10 to 35 parts by weight based on the total weight of the resin component. The second polyol is preferably present in the resin component in an amount of at least 20 parts by weight, more preferably from 20 to 75 parts by weight, based on the total weight of the resin component.

In one embodiment, the resin component further includes graft polyol. Graft polyols are generally prepared by the in situ polymerization, in a polyol or combination of polyols, of an ethylenically unsaturated monomer or a mixture of ethylenically unsaturated monomers. Graft polyols suitable for the subject invention include Pluracol® 1198, Pluracol® 1218, Pluracol® 1409 and Pluracol® 1413, each of which is available from BASF Corporation of Mount Olive, NJ.

When a graft polyol is used, the first polyol, the second polyol, and the graft polyol are preferably present in the resin component in a combined amount of at least 60 parts by weight, more preferably from 60 to 85 parts by weight, and most preferably from 75 to 85 parts by weight based on the total weight of the resin component.

Preferably, at least one catalyst is present in the resin component, however, it is to be appreciated that the catalyst may be included in the sprayable elastomer composition separate from the resin component. The catalyst is selected from the group of metal-based catalysts, amine-based catalysts, and combinations thereof. Examples of suitable metal-based catalysts which may be used include stannous chloride, dibutyltin di-2-ethyl hexanoate, stannous oxide, as well as other organometallic compounds including potassium, bismuth, zinc, mercury and lead based catalysts. Examples of suitable amine-based catalysts which may be used include tertiary amines such as triethylenediamine, N-methylmorpholine, N-ethylmorpholine, diethylethanolamine, N-cocomorpholine, 1-methyl-4-dimethylaminoethylpiperizine, 3-methoxypropyidimethylamine, N,N,N'-trimethylisopropyl propylenediamine, 3-diethylaminopropyldiethylamine, dimethylbenzylamine, and the like. Furthermore, temperature-activated catalysts may also be used. Examples of suitable temperature-activated catalysts are Polycat® SA-1 and Polycat® SA-102, which are based on 1,8 diaza-bicyclo (5,4,0) undecene-7 and are commercially available from Air Products and Chemicals, Inc.

Preferred amine-based catalysts are DABCO® EG, DABCO® HG, DABCO® 33LV and POLYCAT® 17 which are commercially available from Air Products and Chemicals, Inc. Suitable metal based catalysts include dioctyltin dimercaptin commercially available as FOMREZ® UL-32 catalyst and other tin catalysts and various BICAT® catalysts which are bismuth carboxylate, zinc carboxylate catalysts and mixtures thereof available from Shepherd Chemical Company. The most preferred catalyst is a mixture of amine and BICAT® catalysts, which result in an initial viscosity build up that reduces sagging of the support layer formed from the sprayable elastomer composition.

The resin component and the sprayable elastomer composition of the present invention also optionally include one or more additives selected from the group of surfactants, antioxidants, adhesion promoters, cross-linking agents, chain extenders, flame retardants, defoamers, UV performance enhancers, ultraviolet light stabilizers, pigments, thixotropic agents and mixtures thereof.

The use of chain extenders, while optional, is highly preferred. Examples of suitable chain extenders include those compounds having at least two functional groups bearing active hydrogen atoms such as hydrazine, primary and secondary diamines, amino alcohols, amino acids, hydroxy acids, glycols, or mixtures thereof. Such agents will generally have a number average molecular weight of less than about 400. A preferred group of chain extending agents include ethylene glycol, 1,4-butanediol, and mixtures thereof.

Preferably, the resin component has a viscosity, as measured by a Brookfield DV-II rheometer, of from 600 to 3000 centipoise at 25 More preferably, the resin component has a viscosity of from 800 to 1500 centipoise at 25°C Resin components having viscosity in the above ranges are optimum for spraying.

The isocyanate component generally corresponds to the formula R' (NCO)_{z} wherein R' is a polyvalent organic radical and z is an integer which corresponds to the valence of R' and is at least two. Preferably, R' includes an aromatic group, however, R' may also be an aliphatic group. Representative of the types of organic polyisocyanates contemplated herein include, for example, bis(3-isocyanatropropyl) ether, 4-diisocyanatobenzene, 1,3-diisocyanato-o-xylene, 1,3-diisocyanato-p-xylene, 1,3-diisocyanato-m-xylene, 2,4-diisocyanato-1-chlorobenzene, 2,4-diisocyanato-1-nitrobenzene, 2,5-diisochyanato-1-nitrobenzene, m-phenylene diisocyanate, p-phenylene diisocyanate, 2,4-toluene diisocyanate, 2,6-toluene diisocyanate, mixtures of 2,4- and 2,6-toluene diisocyanate, 1,5-naphthalene diisocyanate, 1-methoxy-2,4-phenylene diisocyanate, 4,4'-diphenylmethane diisocyanate, 2,4'-diphenylmethane diisocyanate, 4,4'-biphenylene diisocyanate, 3,3'-dimethyl-4,4'-diphenylmethane diisocyanate, and 3,3'-dimethyldiphenylmethane-4,4'-diisocyanate; the triisocyanates such as 4,4',4"-triphenylmethane triisocyanate polymethylene polyphenylene polyisocyanate and 2,4,6-toluene triisocyanate; and the tetraisocyanates such as 4,4'-dimethyl-2,2'-5,5'-diphenylmethane tetraisocyanate. Especially useful due to their availability and properties are toluene diisocyanate, 2,4'-diphenylmethane diisocyanate, 4,4'-diphenylmethane diisocyanate, polymethylene polyphenylene polyisocyanate, and mixtures thereof.

The isocyanate component is preferably a modified multivalent isocyanate, i.e., a product which is obtained through chemical reactions of the above diisocyanates and/or polyisocyanates. Examples include polyisocyanates containing the following groups: esters, ureas, biurets, allophanates, carbodiimides, uretonimines, isocyanurate and/or urethane group containing diisocyanates and/or polyisocyanates. Individual examples are: aromatic polyisocyanates containing urethane groups, having NCO contents of from 8 to 33.6 weight percent, more preferably of from 18 to 25 weight percent, for example with diols, triols, oxyalkylene glycols, dioxyalkylene glycols, polyoxyalkyleneglycols, polyester polyols or polytetrahydrofuran having molecular weights up to 6000, modified 4,4'-diphenylmethanediisocyanate or toluenediisocyanate, whereby they are able to be employed individually or in mixtures as di- and/or polyoxyalkyleneglycols. Individual examples of the polyoxyalkyleneglycols include diethylene glycols, dipropylene glycols, polyoxyethylene glycols, polyoxypropylene glycols and polyoxypropylene polyoxethylene glycols. Suitable also are polyisocyanates containing liquid carbodiimide-uretonimine groups and/or isocyanurate rings, having NCO contents of from 8 to 33.6 weight percent, more preferably from 21 to 31 weight percent, for example, based on 4,4'-2,4'- and/or 2,2'-diphenylmethane diisocyanate and/or 2,4- and/or 2,6-toluene diisocyanate and preferably 2,4- and 2,6-toluene diisocyanate, as well as the corresponding isomeric mixtures 4,4'-, 2,4'- and 2,2'-diphenylmethane diisocyanate, as well as the corresponding isomeric mixtures for example from 4,4'- and 2,4'-diphenylmethane diisocyanates; mixtures of diphenylmethane diisocyanates and polyphenyl polymethylene polyisocyanates (polymeric MDI) and mixtures of toluene diisocyanates and crude MDI. These quasi-prepolymers are prepared by reacting an excess of organic polyisocyanate or mixtures thereof with a minor amount of an active hydrogen-containing compound as determined by the well known Zerewitinoff test as described by Kohler in Journal of the American Chemical Society, 49, 3181 (1927).

Most preferably, the isocyanate component includes prepolymers and has an NCO content of from 8 to 27 parts by weight based on the weight of the prepolymer. The prepolymers are prepared by the reaction of polyoxyalkylene polyols with an isocyanate. Preferably, the polyoxyalkylene polyols have a functionality of from two to four and a molecular weight of from 400 to 6000. The isocyanate is preferably 4,4'-diphenylmethane diisocyanate, however a mixture of 4,4'- and 2,4'-diphenylmethane diisocyanates is also suitable.

The sprayable elastomer composition has an isocyanate index of from 80 to 120, preferably from 90 to 110. The most preferred isocyanate index for the sprayable elastomer composition is from 98 to 105, wherein a 100 isocyanate index refers to an amount of the isocyanate component required for a stoichiometric ratio and so on.

The method for making the composite structure occurs in a mold having a mold cavity. Preferably, the mold is an open mold, however, closed molds may also be used. Such molds are known in the art.

The first layer is applied to the mold cavity. The first layer is a show surface of the composite structure. Preferably, the first layer includes a one component composition or multi-component composition based on a urethane coating composition. Among the numerous commercially available coating compositions which have proven useful are those marketed under the following trade names: Protothane® which is available from Titan Finishes Corp.; Polane® which is available from Sherwin Williams, Inc.; and Rimbond® which is available from Lilly Corp.

Alternatively, the first layer may include a styrenated polyester. When used, the styrenated polyester preferably has a nominal styrene content of at least 35 parts by weight based on the total weight of the styrenated polyester. Most preferably, the nominal styrene content of the styrenated polyester is 42 parts by weight. The styrenated polyester is formed from phthalic acid and an organic compound comprising a plurality of hydroxyl groups. The phthalic acid is most preferably isophthalic acid and the organic compound is most preferably an alcohol. Available hydrogen atoms from the isophthalic acid are replaced with an organic group from the alcohol to form the polyester. One styrenated polyester suitable for use in the subject invention is commercially available as Vipel™ F737-FB Series Polyester Resin (formerly E737-FBL) from AOC Resins of Collierville, Tennessee.

Prior to applying the first layer, the mold cavity may be coated with a known mold release agent by means of a spray gun to facilitate demolding of the resultant composite structure. By way of non-limiting examples, the mold release agent may be a composition including silicones, soaps, waxes and/or solvents. Alternatively, the mold release agent may be a film applied to the surface of the mold.

The sprayable elastomer composition, the components of which are set forth above, is applied, preferably by spraying, on the first layer to form a support layer and to complete the composite structure. However, it is to be appreciated that the sprayable elastomer composition may be applied by other methods, such as pouring. As understood by those skilled in the art, relative humidity is an important environmental condition to be considered when making the composite structure. Typically, the sprayable elastomer composition is applied in the presence of from 20 to 100 grains/pound absolute humidity and, since the moisture affects the reaction between the isocyanate component and the resin component, the presence of the moisture scavenger and the anti-settling agent is required. Since the moisture scavenger may partially settle out of the resin component, the resin component is preferably agitated prior to applying the sprayable elastomer composition to mix any settled-out moisture scavenger back into the resin component.

The composite structure is cured in the mold cavity, preferably for a period of at least 20 seconds, most preferably for a period of from 22 to 90 seconds. After curing, the support layer is substantially tack-free, i.e., pressing a 15 mm diameter foot attached to a force gauge onto the back surface of the support layer with 16 Newtons of force and immediately removing it requires less than 16 Newtons of force to remove. The composite structure is demolded from the mold cavity after curing.

As an optional step, a polyurethane foam composition may be introduced into the mold cavity and applied to the support layer to form a foamed backing layer on the composite structure. The polyurethane foam composition may be any polyurethane foam composition as known in the art that includes a blowing agent to blow the foam composition. Alternatively, the polyurethane foam composition may be applied to the support layer after demolding the composite structure.

### EXAMPLES

Resin components of the subject invention are prepared including the first polyol, the second polyol, the moisture scavenger, the anti-settling agent, and other components as set forth below. The isocyanate component is combined with the resin component in a spray gun to produce the sprayable elastomer composition. Examples are prepared for testing overall moisture resistance of the support layer formed from the sprayable elastomer composition. Overall moisture resistance is related to the effect of moisture on the reaction between the resin component and the isocyanate component. Thus, there is a direct correlation between the amount of moisture scavenger suspended in the resin component and the overall moisture resistance of the support layer.

To test overall moisture resistance, the resin component is visually observed over time for separation. In addition, the sprayable elastomer composition is sprayed on a vertical surface and visually observed for sagging, which is also useful for determining overall moisture resistance. An air assist extension with a 419 nozzle is used to spray the sprayable elastomer composition. One pass of the sprayable elastomer composition is sprayed at a rate of about 18 g/s and the nozzle is moved at a speed of about 150 mm/s to produce a layer of the sprayable elastomer composition on the horizontal surface of about 1 mm. All of the examples according to the subject invention will exhibit improved overall moisture resistance, as compared to existing resin components. Specific components included in the resin component and the sprayable elastomer composition are set forth in Table 1. All amounts are parts by weight based on the total weight of the resin component, unless otherwise stated.

**TABLE 1**

| **Resin Component** | **Component** | **Ex. A** | **Ex. B** | **Ex. C** |
|---|---|---|---|---|
| | Polyol A | 25.17 | 0.00 | 0.00 |
| | Polyol B | 29.50 | 11.40 | 34.74 |
| | Polyol C | 0.00 | 70.29 | 0.00 |
| | Polyol D | 33.00 | 0.00 | 0.00 |
| | Polyol E | 0.00 | 0.00 | 38.72 |
| | Polyol F | 0.00 | 0.00 | 2.21 |
| | Anti-settling Agent | 0.60 | 0.63 | 0.60 |
| | Moisture Scavenger | 1.00 | 1.00 | 0.82 |
| | Catalyst A | 1.00 | 1.00 | 0.00 |
| | Catalyst B | 0.10 | 0.05 | 0.00 |
| | Catalyst C | 0.03 | 0.03 | 0.04 |
| | Catalyst D | 0.00 | 0.00 | 0.82 |
| | Additive A | 8.00 | 10.00 | 14.60 |
| | Additive B | 0.10 | 0.10 | 0.08 |
| | Additive C | 0.50 | 0.00 | 0.80 |
| | Additive D | 0.00 | 0.00 | 0.80 |
| | Additive E | 0.50 | 0.00 | 4.97 |
| | Additive F | 0.00 | 5.50 | 0.00 |
| | Additive G | 0.50 | 0.00 | 0.00 |
| | Additive H | 0.00 | 0.00 | 0.80 |
| | Total | 100.00 | 100.00 | 100.00 |
| **Isocyanate Component** | Isocyanate, amount by weight based on 100 parts of the resin component | 42.80 | 52.1 | 77.8 |
| | NCO % | 23 | 23 | 23 |
| | **Total** | 100.00 | 100.00 | 100.00 |

Polyol A is a trimethylol propane-initiated polyether polyol, including propylene oxide and ethylene oxide, and having a nominal functionality of three and a hydroxyl number of 35 mg KOH/g, commercially available from BASF Corporation.

Polyol B is a dipropylene glycol-initiated polyether polyol, including propylene oxide and ethylene oxide, and having a nominal functionality of two and a hydroxyl number of 29 mg KOH/g, commercially available from BASF Corporation.

Polyol C is a glycerin-initiated polyether polyol, including propylene oxide and ethylene oxide, and having a nominal functionality of three and a hydroxyl number of 35 mg KOH/g, commercially available from BASF Corporation.

Polyol D is a graft polyol dispersion having 30 percent by weight acrylonitrile/styrene in a 1:1 weight ratio and 70 percent by weight Polyol A, commercially available from BASF Corporation.

Polyol E is a trimethylol propane-initiated polyether polyol, including propylene oxide and ethylene oxide, and having a nominal functionality of three and a hydroxyl number of from 24 to 26 mg KOH/g, commercially available from BASF Corporation.

Polyol F is a polyether polyol having a nominal functionality of two and a hydroxyl number of 1200 mg KOH/g, commercially available from Arco Chemical Co.

Anti-Settling Agent is Aerosil® R-972 hydrophobic fumed silica, commercially available from Degussa.

Moisture Scavenger is a combination of sodium aluminasilicate and potassium aluminasilicate, commercially available from UOP LLC.

Catalyst A is 33 weight percent 1,4-diaza-bicyclo [2.2.2] octane and 67 weight percent dipropylene glycol catalyst, commercially available from Air Products and Chemicals, Inc.

Catalyst B is a temperature-activated catalyst based on 1,8-diaza-bicyclo (5,4,0) undecene-7, commercially available from Air Products and Chemicals, Inc.

Catalyst C is mixture of 8 weight percent bismuth as bismuth neodecanoate and 8 weight percent zinc neodecanoate in neodecanoic acid, commercially available from Shepherd Chemical Co.

Catalyst D is 25 weight percent 1,4-diaza-bicyclo [2.2.2] octane and 75 weight percent 1,4-butane diol catalyst.

Additive A is 1,4 butane diol.

Additive B is a silicone defoamer, commercially available from Dow Corning.

Additive C is a hindered amine light stabilizer, commercially available from Ciba Specialty Chemicals Corp.

Additive D is a hindered amine light stabilizer, commercially available from Ciba Specialty Chemicals Corp.

Additive E is Repitan 99430 pigment available from Repi SpA.

Additive F is DM-46973 pigment available from Plasticolors, Inc.

Additive G is an ultraviolet light stabilizer, commercially available from Givaudan-Roure Corp.

Additive H is an antioxidant, commercially available from BASF Corporation.

Isocyanate is a prepolymer including 87.0 weight percent diphenylmethane diisocyanate, 8.0 weight percent dipropylene glycol, 5.0 weight percent polyether diol and having a percent NCO of 23, commercially available from BASF Corporation.

The invention has been described in an illustrative manner, and it is to be understood that the terminology which has been used is intended to be in the nature of words of description rather than of limitation. Obviously, many modifications and variations of the present invention are possible in light of the above teachings, and the invention may be practiced otherwise than as specifically described.

## Claims

1. A resin component for use in a sprayable elastomer composition, said resin component comprising:
a first polyol having a nominal functionality of at least two;
a second polyol different from said first polyol and having a nominal functionality of at least three wherein said first and second polyols together are present in said resin component in a total amount of at least 50 parts by weight based on the total weight of said resin component;
a moisture scavenger; and
an anti-settling agent present in an amount of greater than 0.5 parts by weight based on the total weight of said resin component.

2. A resin component as set forth in claim 1 wherein said anti-settling agent comprises a fumed silica.

3. A resin component as set forth in claim 1 wherein said anti-settling agent comprises a montmorillonite.

4. A resin component as set forth in claim 1 wherein said anti-settling agent is present in an amount of from 0.6 to 2.5 parts by weight based on the total weight of said resin component.

5. A resin component as set forth in claim 1 wherein said moisture scavenger is selected from the group of sodium aluminasilicates, potassium aluminasilicates, calcium aluminasilicates, and combinations thereof.

6. A resin component as set forth in claim 1 wherein a weight ratio of said moisture scavenger to said anti-settling agent in said resin component is from 1:1 to 9:1.

7. A resin component as set forth in claim 1 wherein said first polyol has a nominal functionality of from two to three.

8. A resin component as set forth in claim 1 wherein said second polyol has a nominal functionality of from three to five.

9. A resin component as set forth in claim 1 wherein said first polyol and said second polyol each have a hydroxyl number of from 20 to 55 mg KOH/g.

10. A resin component as set forth in claim 1 further comprising a graft polyol.

11. A resin component as set forth in claim 1 wherein said first polyol and said second polyol are present together in a total amount of from 54 to 85 parts by weight based on the total weight of said resin component.

12. A resin component as set forth in claim 1 further comprising at least one catalyst selected from the group of metal-based catalysts, amine-based catalysts, and combinations thereof.

13. A resin component as set forth in claim 1 further comprising at least one additive selected from the group of surfactants, antioxidants, adhesion promoters, cross-linking agents, chain extenders, flame retardants, defoamers, UV performance enhancers, ultraviolet light stabilizers, pigments, thixotropic agents, and combinations thereof.

14. A resin component as set forth in claim 1 having a viscosity of from 600 to 3000 centipoise at 25°C.

15. A resin component as set forth in claim 1 having a viscosity of from 800 to 1500 centipoise at 25°C.

16. A method of making a composite structure in a mold having a mold cavity, said method comprising the steps of:
a) applying a first layer that is a show surface of the composite structure to the mold cavity;
b) applying a sprayable elastomer composition on the first layer to form a support layer, wherein the sprayable elastomer composition comprises a moisture scavenger, an anti-settling agent, an isocyanate component, and a resin component including a first polyol and a second polyol different from the first polyol;
c) curing the composite structure in the mold cavity; and
d) demolding the composite structure from the mold cavity.

17. A method as set forth in claim 16 wherein the step of curing occurs for a period of at least 20 seconds prior to demolding.

18. A method as set forth in claim 17 wherein the step of curing the composite structure occurs for a period of from 20 to 90 seconds prior to demolding.

19. A method as set forth in claim 16 wherein said step of applying the sprayable elastomer composition occurs in the presence of from 20 to 100 grains/pound absolute humidity.

20. A method as set forth in claim 16 wherein the sprayable elastomer composition is sprayed on the first layer to form the support layer.

21. A method as set forth in claim 16 further comprising the step of applying a mold release agent to the mold cavity prior to applying the first layer.

22. A method as set forth in claim 16 further comprising the step of agitating the resin component prior to applying the sprayable elastomer composition.

23. A method as set forth in claim 16 further comprising the steps of introducing a polyurethane foam composition into the mold cavity and applying the polyurethane foam composition to the support layer to form a foamed backing layer on the composite structure prior to demolding the composite structure.

24. A method as set forth in claim 23 wherein the step of curing occurs for a period of at least 15 seconds prior to applying the polyurethane foam composition to the support layer.

25. A method as set forth in claim 16 further comprising the step of applying a polyurethane foam composition to the support layer after demolding the composite structure.

26. A sprayable elastomer composition comprising:
an isocyanate component;
a resin component reactive with said isocyanate component, said resin component including a first polyol and a second polyol different from said first polyol;
a moisture scavenger; and
an anti-settling agent.

27. A sprayable elastomer composition as set forth in claim 26 having an isocyanate index of from 80 to 120.
